# EUROPEAN PATENT APPLICATION

(11) **EP 4 818 979 A1**
(43) Date of publication of application: **07.10.2026**
(21) Application number: 26168081.3
(22) Date of filing: 26.03.2026
(51) Int. Cl.: G06N 3/08, G10L 21/0208, G10L 25/30

(54) **PRIVACY-CENTRIC VIRTUAL ASSISTANT FOR UNIFIED COMMUNICATION INFRASTRUCTURE WITH PHYSICS-ENHANCED DENOISING AND MODULAR PROTOCOL**

(30) Priority: 31.03.2025 US 202519096008
(71) Applicant: Mitel Networks Corporation, Ottawa, Ontario K2K 3K1 (CA)
(72) Inventor: Alsharef, Ahmad, 500170 Brasov (RO)
(74) Representative: McDougall, James

(57) **Abstract**

Systems and methods including one or more processors and one or more non-transitory storage devices storing computing instructions configured to run on the one or more processors and perform acts of capturing unstructured data from the UC system; generating, using one or more computerized models, one or more training datasets from the unstructured data and the denoised audio data; generating a virtual assistant model, the virtual assistant model being of a size for deployment on low-computational devices; training, using the one or more training datasets, the virtual assistant model to respond to queries regarding UC infrastructure or device management; and deploying the virtual assistant model on the UC system for use by an end user. The protocol benefits denoising in real-time as a sub-step inside data preparation, using a physics informed neural network (PINN), audio data from the unstructured data, the PINN being trained using wave equation constraints.

## Description

### TECHNICAL FIELD

This disclosure relates generally to unified communication (UC) methods and systems and more particularly to methods and systems for an artificial intelligence (AI) assistant for a UC system.

### BACKGROUND

Modern UC systems, such as those used for videoconferencing, voice communication, instant messaging, email, and remote collaboration, are complex and demand high support, which can slow down productivity. Existing AI in UC systems provide tools for limited use-cases, such as organizing meetings and calls which are not scaled to control UC infrastructure, are non-customizable to organizational needs, and might raise privacy and cost concerns. Furthermore, AI-Assistant systems often require third-party integrations, exposing sensitive organizational data to external networks. This creates concerns about data sovereignty, as organizations cannot fully control how their data is processed or used, particularly during model training, fine-tuning, and serving.

Efforts to address these issues have included various AI assistants in UC systems. While these tools can address some of the needs of individuals using UC systems, they often require high-end servers and infrastructure and lack control over UC infrastructure via the AI. These systems may not be able to address specific UC scenarios, leading to irrelevant or non-direct answers.

Therefore, there is a need for improved methods and systems to provide tailored assistance and enhance the digital experience for users of UC systems.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 is a block diagram of a system according to aspects of this disclosure;
FIG. 2 is a block diagram of a method for preparing a dataset for use by the AI assistant according to aspects of this disclosure;
FIG. 3 is a block diagram depicting a method for training, optimizing, and deploying the AI assistant according to aspects of this disclosure;
FIG. 4 is a block diagram depicting a method for denoising audio data according to aspects of this disclosure;
FIG. 5 is a flowchart for creating a virtual assistant for a UC system according to aspects of this disclosure; and
FIG. 6 illustrates a representative block diagram of a computer system, according to an embodiment.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### DETAILED DESCRIPTION

The description of exemplary embodiments of the present invention provided herein is merely exemplary and is intended for purposes of illustration only; the following description is not intended to limit the scope of the invention as claimed. Moreover, recitation of multiple embodiments having stated features is not intended to exclude other embodiments having additional features or other embodiments incorporating different combinations of the stated features.

It must also be noted that, the term "exemplary" is used in the sense of "example," rather than "ideal."

It must also be noted that, as used in the specification and the appended claims, the singular forms "a," "an" and "the" include plural referents unless the context clearly dictates otherwise.

By "comprising" or "containing" or "including" it is meant that at least the named compound, element, particle, or method step is present in the composition or article or method, but does not exclude the presence of other compounds, materials, particles, method steps, even if the other such compounds, material, particles, method steps have the same function as what is named.

Relative terms, such as "about," "substantially," or "approximately" are used to include small variations with specific numerical values (e.g., +/- x%,), as well as including the situation of no variation (+/-0%). In various embodiments, the numerical value x is less than or equal to 10 - e.g., less than or equal to 5, to 2, to 1, or smaller.

As used herein, "database" refers to any suitable database for storing information, electronic files or code to be utilized to practice embodiments of this disclosure. As used herein, "server" refers to any suitable server, computer or computing device for performing functions utilized to practice embodiments of this disclosure.

As used herein, "software" refers to programs or other operating information utilized by a processor or other computing hardware.

As used herein, "meeting" means a meeting or conference such as telephonic, video, audio/video, in-person, a hybrid of any of the preceding, and any type of meeting involving multiple participants.

This disclosure provides a system for creating a virtual assistant for a unified communication (UC) system (referred to herein as "the system" and/or "AI-assistant system"). The system described herein can implement a protocol for developing artificial intelligence (AI) assistants (also referred to herein as "virtual assistants") in data-scarce environments, utilizing multimodal inputs-including video, voice, meeting recordings, screenshots, and text-to generate context-aware training datasets through AI-vision and automated speech recognition (ASR). A privacy-centric pipeline can integrate Differential Privacy (DP) to anonymize sensitive data during preprocessing of the data from the multimodal inputs, to improve compliance with data sovereignty regulations. Physics-Informed Neural Networks (PINNs) can be applied to enforce acoustic wave equations, enabling real-time voice denoising with compact models (e.g., models that are ≤ 2 MB) deployable on low-resource edge devices. Applied to UC infrastructure, the system described herein can produce an AI assistant that streamlines user interactions by executing management tasks via natural language commands, delivering fast, accurate responses while addressing scalability and latency.

The system described herein can be a privacy-centric, latency-optimized AI assistant for UC infrastructure, designed to execute device management tasks (e.g., user assignments, server diagnostics) via voice or text commands. The system's modular design, supported by a no-code platform, allows integration and reuse of low-rank adapters (LoRA) across products without retraining, ensuring sustainability and adaptability to evolving use cases. The system further includes secure, scalable support for UC operations-from basic queries to complex device control-enhancing accuracy, privacy, and operational flexibility. The assistant, denoising method, and protocol are independently applicable to domains requiring efficient audio correction or privacy-compliant data preparation.

Particular aspects or embodiments of the subject matter described in this disclosure may be implemented to realize one or more of the following advantages. UC systems are complex and demand high technical support, which can slow down productivity for users. UC systems' inherent complexity can create steep learning curves for users, overwhelming the users and their support teams, thereby reducing productivity and increasing operational costs. Existing UC technologies have a dependence on the network and may require a stable network connection, limiting usability in low-connectivity areas. Existing technologies may also experience latency issues, where users may experience delays in response time, impacting productivity.

In addition, existing AI tools in UC systems provide tools for limited use-cases (e.g., AI can organize meetings and calls but is not scaled to control the UC infrastructure), are non-customizable to organizational needs, and might raise privacy and cost concerns. For example, AI-Assistant systems often require third-party integrations, exposing sensitive organizational data to external networks. This creates concerns about data sovereignty, as organizations cannot fully control how their data is processed or used, particularly during model training, fine-tuning, and serving. Furthermore, organizations frequently face challenges in adapting AI models due to a lack of sufficient, structured training data. This scarcity limits their ability to develop solutions that align with their unique operational requirements, hindering the usability of AI. In addition, noise in communication environments presents a major obstacle, as both AI-voice assistants and UC systems lack effective, embedded AI mechanisms for voice denoising. This results in reduced transcription accuracy, less reliable automatic speech recognition (ASR), and poor overall user experience, particularly in noisy conditions.

Furthermore, these existing tools lack customization and scalability, resulting in generic solutions that do not address specific needs and are not tailored to control UC infrastructure, leading to irrelevant or non-direct answers from the AI. Many existing technologies require high resources, depending on expensive high-end hardware, limiting accessibility for organizations with limited budgets. Additionally, their dependence on cloud-based hosts raises significant cost, data privacy, and compliance concerns. Moreover, existing technologies are not suitable for limited hardware and consequently, performance drops on devices with limited computational power.

Privacy concerns may also be at issue with existing technologies. Existing solutions are either based on third-party integration, not giving the owner full sovereignty over their data, or the data is shared through a network. In addition, there's a concern about what data is used to finetune or train the AI model.

The system described herein can address these issues by introducing a privacy-focused, adaptive AI assistant tailored for UC environments which can simplify UC system management, ensure data sovereignty, and overcome challenges like data scarcity and noisy communication. The system can empower organizations to integrate AI effectively, even in resource-constrained settings. The protocol followed to build this assistant can be followed to create other AI-Assistants for different use cases with optimal outcomes.

The system described herein can create an AI assistant for controlling UC infrastructure. The AI assistant can be tailored to meet specific challenges within the UC sector and may be industry specific. The AI assistant may perform operation execution via voice and text, such as by enabling internet protocol (IP) devices and user management through voice and text control, enhancing interaction. The AI assistant can provide accurate and relevant responses by providing clear and concise answers relevant to UC users.

The system can use a protocol and platform to create the AI assistant for diverse needs, addressing challenges assistants are facing including privacy, scalability, cost, resource constraints, noisy input, data scarcity, training, and reusability. The protocol may integrate multi-data sources, Physics-AI denoising, multimodal data preparation, Differential Privacy (DP), and modular fine-tuning methods like parameter-efficient fine tuning (PEFT) LoRA, configuration optimization, and deployment, which can improve scalability, performance, and privacy. This staging of new and existing tools is automated through a pipeline and no-code platform to produce AI-Assistant solutions, from including data and model preparation, without requiring programming. The protocol's ability to generate datasets from unconventional sources like screenshots and meeting recordings improves scalability in data-limited environments, which is a significant technical barrier in creating AI assistants for niche domains and overcomes the data scarcity problem as described above. The protocol also represents a solution with an environmentally friendly low computational footprint and carbon emissions, and reusability of AI models, even as use cases evolve.

The system described herein can create a dataset from unconventional data sources and using unconventional data preparation methods. The dataset construction process can utilize multimodal inputs such as user-interface screenshots, meeting recordings, and discussions from the UC system. By applying AI-vision and transcribing techniques and anonymization, the system can transform these sources into training datasets tailored for UC-specific or general AI-assistant contexts. The system may use an augmented dataset, which can enhance model training by offering a richer, more context-specific dataset augmented from raw data.

The system can leverage Physics-Informed Neural Networks (PINNs) to embed acoustic wave equations into a novel neural network and to perform physically consistent real-time audio denoising. This approach to denoising can improve model size for deployment on low-computational devices (e.g., IP phones and the like), enhancing voice clarity and transcription accuracy in noisy UC environments. The system is applied to denoise conference/meeting recordings during data preparation and also can be used for real-time denoising of user voice queries.

The AI assistant may be deployed locally and privacy centric. The AI assistant may operate efficiently on edge devices (e.g., smartphones, IoT systems) with basic CPUs, achieving real-time execution through lightweight, portable models optimized for minimal computational requirements. The system can keep data from leaving the local environment via fully localized deployment of the AI assistant and data processing pipeline. The system can combine client-side learning (e.g., no network transmission during training/model preparation) with Differential Privacy (DP) techniques to anonymize raw data, reducing exposure risks and aligning with strict regulatory compliance. Furthermore, the system described herein can reduce dependency on expensive cloud infrastructure or high-end hardware, reducing operational costs while maintaining performance.

The system described herein can overcome the limitations of small models in various ways. First, the system may train an AI assistant model to suggest tools, such as analyzable text-JavaScript Object Notation (JSON) format, enabling operation execution. The AI assistant model may include a verification and validation layer, which can include mechanisms to prevent the assistant model from using the wrong tool or using the correct tool incorrectly. The AI assistant model may further incorporate a hybrid use of LoRA adapters. The assistant can employ reusable adapters that can be integrated with other models or products without retraining, enabling multi-product AI capabilities with minimal resource investment.

The system can automate processes using machine learning operations (MLOps) pipeline automation. This can streamline data preparation and fine-tuning and model deployment, monitoring, versioning, and rollback. This can also enhance the system's scalability and ease maintenance efforts. The automated pipeline can resolve cross-platform dependency issues, to provide reproducibility and scalability in multi-environment deployments (e.g., on-prem, hybrid, or cloud).

Finally, the system described herein may also include a user-friendly interface. For example, the user interface may offer text and voice control with little to no learning curve, reducing user hesitancy towards AI solutions. The no-code platform can allow data preparation, model finetuning, integration, and customization without the need for programming. In addition, the system may include customizable interactions. For example, the assistant's no-code platform can allow users to configure models and workflows for specific business needs, making it adaptable across diverse industries and UC scenarios.

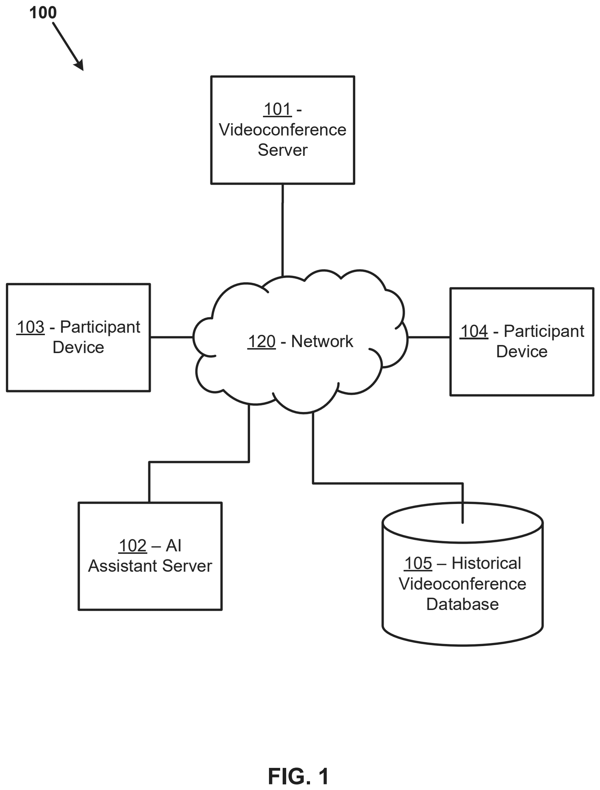

Turning to the figures, FIG. 1 illustrates a block diagram of a system 100 that can be employed for creating a virtual assistant for a unified communication (UC) system, as described in greater detail below. System 100 is merely exemplary and embodiments of the system are not limited to the embodiments presented herein. System 100 can be employed in many different embodiments or examples not specifically depicted or described herein. In some embodiments, certain elements or modules of system 100 can perform various procedures, processes, and/or activities. In these or other embodiments, the procedures, processes, and/or activities can be performed by other suitable elements or modules of system 100.

Generally speaking, system 100 can be implemented with hardware and/or software. Part or all of the hardware and/or software implemented in system 100 can be conventional or part or all of the hardware and/or software can be customized (e.g., optimized) for implementing part or all of the functionality of system 100 described herein.

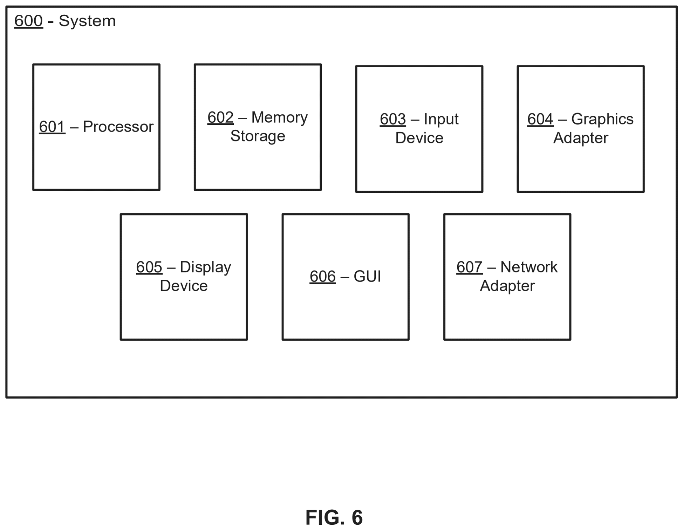

System 100 can include videoconference server 101, AI assistant server 102, participant devices 103, 104, and/or historical videoconference database 105. Videoconference server 101, AI assistant server 102, and/or participant devices 103, 104 can each be a computer system, such as computer system 600 (FIG. 6) and can each be a single computer, a single server, a cluster or collection of computers or servers, or a cloud of computers or servers.

Participant devices 103, 104 can comprise any of the elements described in relation to computer system 600 (FIG. 6). For example, participant devices 103, 104 can be mobile devices. A mobile device can refer to a portable electronic device (e.g., an electronic device easily conveyable by hand by a person of average size) with the capability to present audio and/or visual data (e.g., text, images, videos, music, etc.). For example, a mobile electronic device can comprise at least one of a digital media player, a cellular telephone (e.g., a smartphone), a personal digital assistant, a handheld digital computer device (e.g., a tablet personal computer device), a laptop computer device (e.g., a notebook computer device, a netbook computer device), a wearable user computer device, or another portable computer device with the capability to present audio and/or visual data (e.g., images, videos, music, etc.). Thus, in many examples, a mobile electronic device can comprise a volume and/or weight sufficiently small as to permit the mobile electronic device to be easily conveyable by hand.

Exemplary mobile electronic devices can comprise (i) an iPod^{®}, iPhone^{®}, iTouch^{®}, iPad^{®}, MacBook^{®} or similar product by Apple Inc. of Cupertino, California, United States of America, (ii) a Pixel^{™} product or a similar product by Google Inc. of Menlo Park, California, United States of America, (iii) a Lumia^{®} or similar product by the Nokia Corporation of Keilaniemi, Espoo, Finland, and/or (iv) a Galaxy^{™} or similar product by the Samsung Group of Samsung Town, Seoul, South Korea. Further, in the same or different embodiments, a mobile electronic device can comprise an electronic device configured to implement one or more of (i) the iPhone^{®} operating system by Apple Inc. of Cupertino, California, United States of America, (ii) the Palm^{®} operating system by Palm, Inc. of Sunnyvale, California, United States, (iii) the Android^{™} operating system developed by the Open Handset Alliance, (iv) the Windows Mobile^{™} operating system by Microsoft Corp. of Redmond, Washington, United States of America, or (v) the Symbian^{™} operating system by Nokia Corp. of Keilaniemi, Espoo, Finland.

Videoconference server 101, AI assistant server 102, and/or one or more of participant devices 103, 104 can each comprise one or more input devices (e.g., one or more keyboards, one or more keypads, one or more pointing devices such as a computer mouse or computer mice, one or more touchscreen displays, a microphone, etc.), and/or can each comprise one or more display devices (e.g., one or more monitors, one or more touch screen displays, projectors, etc.). In these or other embodiments, one or more of the input device(s) can be similar or identical to input device 603 (FIG. 6). Further, one or more of the display device(s) can be similar or identical to display device 605 (FIG. 6). The input device(s) and the display device(s) can be coupled to the processing module(s) and/or the memory storage module(s) of videoconference server 101, AI assistant server 102, and/or one or more of participant devices 103, 104 in a wired manner and/or a wireless manner, and the coupling can be direct and/or indirect, as well as locally and/or remotely. As an example of an indirect manner (which may or may not also be a remote manner), a keyboard-video-mouse (KVM) switch can be used to couple the input device(s) and the display device(s) to the processing module(s) and/or the memory storage module(s). In some embodiments, the KVM switch also can be part of videoconference server 101, AI assistant server 102, and/or one or more of participant devices 103, 104. In a similar manner, the processing module(s) and the memory storage module(s) can be local and/or remote to each other.

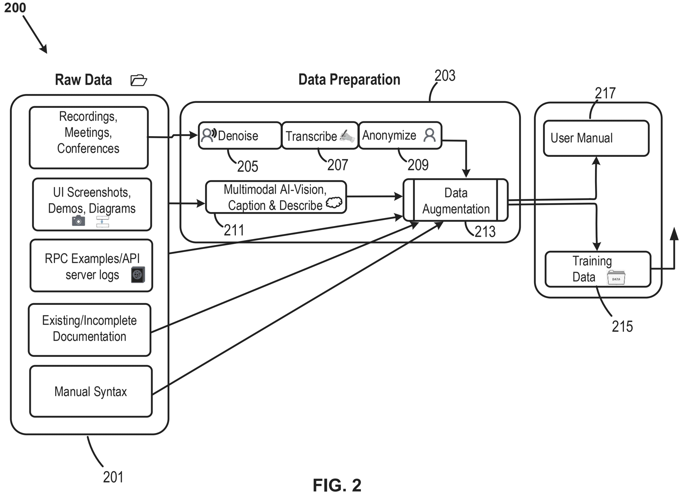

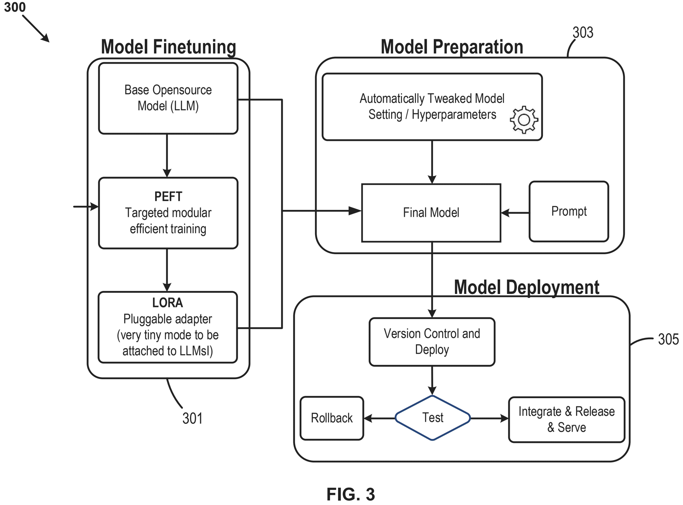

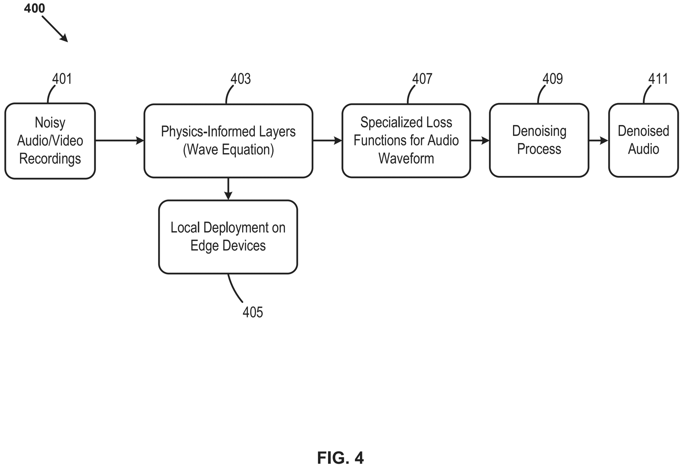

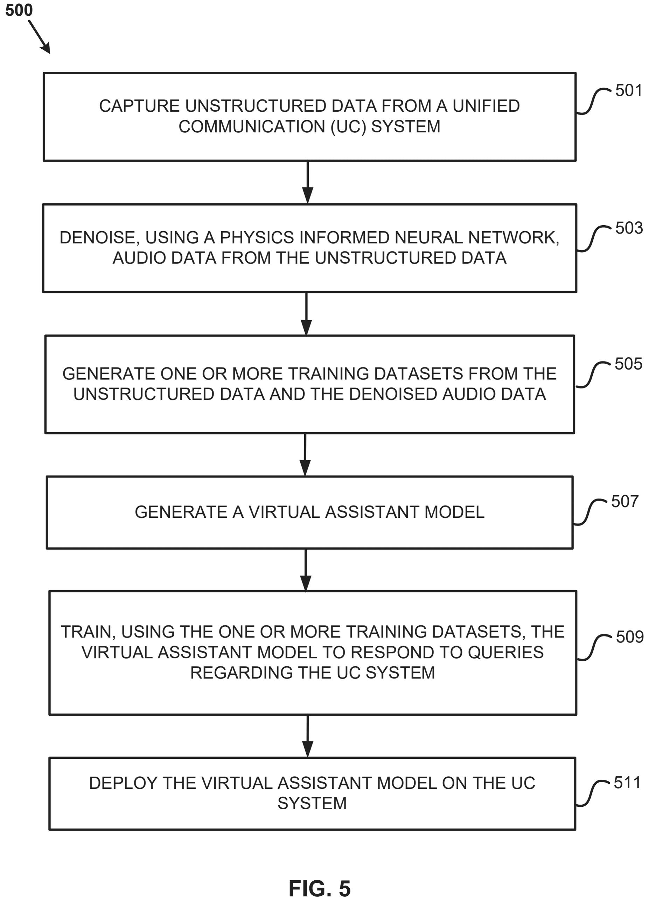

Videoconference server 101 can host and/or run one or more videoconference software platforms. AI assistant server 102 can host a system for creating a virtual assistant for a unified communication (UC) system as described herein. For example, AI assistant server 102 can perform one or more steps of method 200 (FIG. 2), method 300 (FIG. 3), method 400 (FIG. 4), and/or method 500 (FIG. 5). In some embodiments, AI assistant server 102 can be embodied in and/or distribute a software application capable of performing one or more steps of method 200 (FIG. 2), method 300 (FIG. 3), method 400 (FIG. 4), and/or method 500 (FIG. 5). The software application can be installed/installable on one or more of participant devices 103, 104.

Videoconference server 101, AI assistant server 102, and/or participant devices 103, 104 can communicate or interface (e.g., interact) with one another through network 120. Network 120 can be an intranet that is not open to the public, a mesh network of individual systems, and/or a distributed system. Accordingly, in many embodiments, videoconference server 101 and/or AI assistant server 102 (and/or the software used by such systems) can refer to a back end of system 100 operated by an operator and/or administrator of system 100, and participant devices 103, 104 (and/or the software used by such systems) can refer to a front end of system 100 used by one or more participants, respectively. An operator and/or administrator of system 100 can manage system 100, the processing module(s) of system 100, and/or the memory storage module(s) of system 100 using the input device(s) and/or display device(s) of system 100.

Videoconference server 101, AI assistant server 102, and/or participant devices 103, 104 also can be configured to communicate with one or more databases. The one or more databases can comprise a historical videoconference database 105 that stores records about past videoconferences. The historical videoconference database 105 can also comprise an interaction database containing information about interactions of participant devices with a videoconference. These interactions can be tied to a unique identifier (e.g., an IP address, an advertising ID, device ID, etc.) and/or a user account. In embodiments where a participant interacts with a videoconference before logging into a user account, data stored in the one or more database that is associated with a unique identifier can be merged with and/or associated with data associated with the user account. The one or more databases may also include a user profile database. The user profile database may include one or more user profiles for each user of the communication apparatus, where each profile in the user profile database can contain specific interaction preferences for each user of the UC system. Data can be deleted from a database when it becomes older than a maximum age, which can be set by an administrator of system 100. Data collected in real-time can be streamed to a database for storage, thereby increasing a storage speed of a database.

The one or more databases can be stored on one or more memory storage modules (e.g., non-transitory memory storage module(s)), which can be similar or identical to the one or more memory storage module(s) (e.g., non-transitory memory storage module(s)) described below with respect to computer system 600 (FIG. 6). Further, the one or more databases can each be stored on a single memory storage module of the memory storage module(s), and/or the non-transitory memory storage module(s) storing the one or more databases or the contents of that particular database can be spread across multiple ones of the memory storage module(s) and/or non-transitory memory storage module(s) storing the one or more databases, depending on the size of the particular database and/or the storage capacity of the memory storage module(s) and/or non-transitory memory storage module(s). In various embodiments, databases can be stored in a cache (e.g., MegaCache) for immediate retrieval on-demand. The one or more databases can each comprise a structured (e.g., indexed) collection of data and can be managed by any suitable database management systems configured to define, create, query, organize, update, and manage database(s). Exemplary database management systems can include MySQL (Structured Query Language) Database, PostgreSQL Database, Microsoft SQL Server Database, Oracle Database, SAP (Systems, Applications, & Products) Database, IBM DB2 Database, and/or NoSQL Database.

Meanwhile, communication between videoconference server 101, AI assistant server 102, participant devices 103, 104, and/or the one or more databases can be implemented using any suitable manner of wired and/or wireless communication. Accordingly, system 100 can comprise any software and/or hardware components configured to implement the wired and/or wireless communication. Further, the wired and/or wireless communication can be implemented using any one or any combination of wired and/or wireless communication network topologies (e.g., ring, line, tree, bus, mesh, star, daisy chain, hybrid, etc.) and/or protocols (e.g., personal area network (PAN) protocol(s), local area network (LAN) protocol(s), wide area network (WAN) protocol(s), cellular network protocol(s), powerline network protocol(s), etc.). Exemplary PAN protocol(s) can comprise Bluetooth, Zigbee, Wireless Universal Serial Bus (USB), Z-Wave, etc.; exemplary LAN and/or WAN protocol(s) can comprise Institute of Electrical and Electronics Engineers (IEEE) 802.3 (also known as Ethernet), IEEE 802.11 (also known as WiFi), etc.; and exemplary wireless cellular network protocol(s) can comprise Global System for Mobile Communications (GSM), General Packet Radio Service (GPRS), Code Division Multiple Access (CDMA), Evolution-Data Optimized (EV-DO), Enhanced Data Rates for GSM Evolution (EDGE), Universal Mobile Telecommunications System (UMTS), Digital Enhanced Cordless Telecommunications (DECT), Digital Advanced Mobile Phone System (AMPS) (IS-136/Time Division Multiple Access (TDMA)), Integrated Digital Enhanced Network (iDEN), Evolved High-Speed Packet Access (HSPA+), Long-Term Evolution (LTE), WiMAX, etc. The specific communication software and/or hardware implemented can depend on the network topologies and/or protocols implemented, and vice versa. In many embodiments, exemplary communication hardware can comprise wired communication hardware including, for example, one or more data buses, such as, for example, universal serial bus(es), one or more networking cables, such as, for example, coaxial cable(s), optical fiber cable(s), and/or twisted pair cable(s), any other suitable data cable, etc. Further exemplary communication hardware can comprise wireless communication hardware including, for example, one or more radio transceivers, one or more infrared transceivers, etc. Additional exemplary communication hardware can comprise one or more networking components (e.g., modulator-demodulator components, gateway components, etc.).

FIG. 2 is a block diagram of a method 200 for preparing a dataset for use by the AI-Assistant system according to aspects of this disclosure. The diagram illustrates an initial phase of a proposed protocol for developing AI assistants, showcasing a reusable and scalable AI framework. This protocol can improve data preparation by reducing data requirements and large language model (LLM) training, utilization, and deployment. In step 201, the AI-Assistant system can gather the raw data. The raw data can include any data from the UC system, as well as text data and API documentations related to the UC system. Examples of raw data that can be used include (i) meetings, conferences, video/audio recordings; (ii) screenshots of the product to integrate the AI-Assistant with (such as the user interface (UI)), diagrams, demos, and any type of visuals; (iii) remote procedure call (RPC) examples or Application Programming Interface (API) server logs, such as API documentation or API call examples or application or server logs; (iv) existing documentation or knowledge base (if available) even if not completed; or optionally, (v) manual syntax added by the assistant owner in the form of a few lines of syntax to tell the rest of the pipeline stages what the purpose of the assistant is.

To retrieve the API call data, the AI-Assistant system can extract the useful function call (e.g., POST /api/phone/5551234567/reset with the phone number as a URL path parameter) directly from unstructured request-response logs of the server using pattern-matching or any small LLM, bypassing reliance on API documentation. The API call examples may come from unstructured logs or screenshots. Furthermore, the AI-assistant system may use visuals or recordings and conferences to train AI models when data and documentation are not available.

In step 203, the AI-assistant system can prepare the data from step 1 using automated data processing. The data can be processed locally (e.g., on the device) to convert the raw data without third-party services. The inputs from step 1 can be processed to prepare a dataset, focusing on creating a dataset of function calls and a knowledge base as question-answer pairs.

To prepare the data, in step 205, the AI-assistant system can first denoise the recordings (e.g., audios or videos of meetings and conferences) using a PINN. The PINN is designed and implemented from scratch for denoising. The PINN can integrate AI and Physics for correcting the audio waves in the recordings using a dataset of clean audio and their corresponding noisy counterparts. Governed by physics laws, the PINN can generate audio in real-time that respects the rules of physics, in addition to the typical AI approach of comparing input-output pairs during training. This combination can result in higher accuracy, faster denoising, better generalization to unseen data, and a smaller model size. The PINN may be applied for denoising audio and video data before passing to the ASR for transcription. Denoising the audio and video data can also improve the accuracy of the ASR transcription by removing extraneous noise from the data. The method to perform denoising will be discussed in further detail below with respect to FIG. 4.

Next, at step 207, an ASR model can transcribe the denoised data and convert it into a text that LLMs and AI agents can understand. The ASR model may be an open-source model that is operating locally (e.g., on the device) to save cost and maintain data privacy.

At step 209, following the transcription, the AI-assistant system can anonymize and correct the transcription. For example, the AI-assistant system can use Differential Privacy (DP) to automate hiding sensitive data, like names of conference/meeting participants (if mentioned in the recording), and correct transcription errors, such as if the ASR misspells product names (e.g. if OSEM transcribed to OZEM or OZEM). This can improve the accuracy and consistency in the datasets. Sensitive data such as names, email addresses, and meeting participants can also be anonymized through automated Named Entity Recognition (NER) and masking. Therefore, the AI-assistant system can maintain accuracy, privacy, scalability, and automation even when having large volumes of data.

At step 211, the AI-assistant system can use multimodal and AI-vision to process the raw data. The AI-assistant system can use local AI-vision multimodal capabilities to convert screenshots or demos into captions, user guides, and descriptions. As such, the AI-assistant system can generate product guide/documentation from screenshots or demos. The resulting documentation can be used later by the AI-assistant to offer question-answering capabilities.

At step 213, the overall data from the previous steps (e.g., the raw data and denoised, transcribed, and anonymized data) may be fed into another locally deployed model for augmentation. Data augmentation can build UC-specific datasets from the smaller available datasets, which can enhance model understanding of UC contexts and reduce dependency on structured training datasets.

Then, the AI-assistant system can generate from the augmented data a user manual 217 and training dataset 215. The training dataset 215 may be in the form of question-answer pairs that final LLMs can be trained on to provide AI-Assistance. The question-answer samples in the training dataset 215 may mimic the way the AI assistant will behave with different user queries and answers. The training data 215 can further include function calls examples generated from API server logs to be used to train the LLM to execute operations. Once ready, the training data 215 can be used in the next phase (shown in FIG. 3) of the pipeline for training the AI-assistant model.

The dataset preparation pipeline described above can improve privacy, regulatory compliance, and dataset reusability. Data may not leave the local environment, addressing privacy concerns. Furthermore, DP may be integrated for anonymization, employing mathematical frameworks to protect sensitive information. DP can be implemented via automated text anonymization and transcription correction processes, leveraging probabilistic replacement for privacy compliance. The anonymized and augmented datasets can be reused across multiple AI models and UC scenarios, which can reduce resource consumption and maintain consistency in training.

FIG. 3 is a block diagram depicting a method 300 for training, optimizing, and deploying the AI assistant according to aspects of this disclosure. First, at step 301, the AI-assistant system can perform model finetuning. The AI-assistant system may fine-tune a minimized base open-source LLM using the prepared dataset (e.g., the dataset from FIG. 2). In some embodiments, the AI-assistant system can perform the model (also referred to herein as "assistant model" or "AI assistant model") finetuning on local, low resource devices. The AI-assistant system can use a base model, such as an open-source LLM, as a foundation for the model. To address deployability limitations, the base model can be quantized and pruned for compact local deployment.

The model can be trained on a prepared dataset (e.g., the dataset of FIG. 2) using targeted modular efficient training. For example, the model can be trained using efficient customization via Employed Parameter Efficient Fine-Tuning (PEFT)/ Low-Rank Adaptation (LoRA). As an example, using PEFT, the AI-assistant system can freeze a percentage (e.g., 98%) of base model parameters and train only the remainder (e.g., 1-2%) of task-specific layers. Utilizing PEFT can help to minimize computational costs. Using LoRA, the AI-assistant system can generate lightweight adapter modules, attachable to any base LLM, enabling rapid customization without altering core parameters. This method of finetuning the model can provide for scalable performance even with small base models (e.g., ≤8B parameters) and limited training data.

The AI-assistant system can further compress the model by applying adaptive pruning and quantization to reduce model size while retaining accuracy, enabling deployment on edge devices. The AI-assistant system can optimize the model for edge devices. For example, the AI-assistant system can balance speed and accuracy through adjustable settings (e.g., context windows, token limits, top-k sampling) for diverse hardware (e.g., smartphones, IP phones). This can enable fast inference (<100 ms latency) on low-resource devices. Additionally, the model finetuning and preparation may operate entirely on-premises to retain sensitive data locally, eliminating cloud dependencies.

Furthermore, a "Lego block" architecture may allow pre-trained LoRA adapters (e.g., Product 1 vs. Product 2) to be merged with base models, enabling hybrid cross-product integrations without retraining. This modular design can improve scalability and provide faster adaptation for multi-product integration in UC environments.

Following model fine tuning, at step 303, the AI-assistant system can perform model preparation. The AI-assistant system can modify the existing model's hyperparameters (e.g., settings). The model's hyperparameters can be optimized for speed and accuracy and meeting user needs. For example, a low temperature (0.2-0.3) can be used to focus on generating precise answers for use cases like user guides, documentation, or function calls, rather than creative outputs. Top-k, top-p, and context size (2048 tokens) of the model can be fine-tuned to ensure concise, relevant responses rather than overly complex responses.

The AI-assistant system can train the model to output JSON-formatted function calls (e.g., POST /api/phone/{number}/reset) for UC infrastructure control. The AI-assistant system can adjust a prompt with few-shot examples to guide the model in answering queries, making function calls, and staying within its trained capabilities, avoiding unauthorized actions. The AI-assistant system can also implement checks to verify function call accuracy and/or safety (e.g., preventing unauthorized server resets).

After assistant model preparation, the assistant model may be ready for use by an end user. This means that the assistant model can now answer users' questions and operations. The assistant model may be designed to control UC infrastructure by performing tasks like resetting phones, assigning homophones to users, restarting servers, and diagnosing problems.

Once the assistant model is ready for use, at step 305, the assistant model can be deployed on the UC system. The assistant model can be deployed on localhost to maintain high privacy and low cost. In some embodiments, the assistant model can also be deployed on-premises, hybrid, or cloud. The AI-assistant system can use automated dependency resolution for deployment across cloud, edge, hybrid, and on-premises environments. The assistant model may be versioned, such as with control over increments, enabling rollback in case of failures or quality degradation. The AI-assistant system can further track the model performance. The model can be tested with a predefined benchmark to accommodate user needs. Then, the AI assistant can be used by an end user. For example, the AI assistant can be used using a user interface.

The AI assistant can be used to control UC infrastructure, such as through voice or written commands. Users could submit queries (e.g., configuring phones, restarting devices), either via voice or text commands. For example, a user may send the AI assistant a command, such as "I want to configure 1234567890 as home phone for John Doe." The system can validate the user input to ensure the query is well-understood. Based on the validated input, the system can provide the user with either: (i) a How-To guide for self-execution, (ii) direct operation execution (e.g., assigning home phones, restarting servers), or (iii) feedback, such as "Operation completed successfully."

The AI assistant can respond with instructions for the user to complete the task or the AI assistant may perform the task for the user and then notify the user when the task is complete. For example, for the request to configure John Doe's home phone, the assistant may respond with "You can set home phone by navigating to Clients Menu, select the phone you want and click 'assign user, John Doe‴ or "I can do it for you in a second. 'Home phone 1234567890 assigned successfully to 'John Doe.‴

In another example, the user may tell the AI assistant "I want to restart client." The AI assistant can respond with "You can restart client by navigating to Clients Menu, select the phone you want and click 'restart. ‴ The AI assistant can also respond with follow up prompts and/or questions if clarification on the question/request is needed. For instance, for the request above, the AI assistant may notify the user that "You forgot to give phone number or IP address for the client to restart." If the AI assistant is performing the task for the user, the AI assistant may respond with "Got it, 'Client restarted successfully.‴

As another example, if the user says, "Update all devices in Section C," the assistant could handle the request directly. The AI assistant can reply with "Updating now. 'Firmware update successfully applied to all devices in Section C.‴ Alternatively, the AI assistant could guide the user: "To update devices, navigate to the Clients Menu, select 'Firmware Update,' filter by 'Section C,' and click 'Apply to All Devices.‴

FIG. 4 is a block diagram depicting a method 400 for denoising audio data according to aspects of this disclosure. The method 400 may be performed using a Physics-Informed Neural Network (PINN) for audio denoising, which can integrate physics principles into voice waveform generation and cleaning. PINNs are neural networks that incorporate physical laws into the neural network training process. By embedding the governing equations of a physical system directly into the loss function for the neural network, the model's outputs not only can fit the data but also adhere to known physical principles.

The method 400 may begin at step 401, where the system can receive noisy audio/video recordings to be denoised. These recordings may originate from the UC system, such as from a meeting or call using the UC system.

At step 403, the system can use physics informed layers (e.g., wave equation) to begin denoising the recordings. PINNs can govern acoustic wave equations and thus can be used for voice denoising in UC environments. The use of PINN in denoising can mitigate the limitations of traditional neural networks methods by requiring less computational power and can be deployed on simple phones. In addition, incorporating physics can enhance the model's ability to produce realistic and physically consistent outputs. This can be particularly helpful when dealing with limited data or when aiming to generalize beyond the training dataset. It's also helpful in real-time denoising as the small, resulting model (approximately one hundred kilobytes to 2MB) can be embedded on personal devices for real-time voice correction. This also can enhance the transcription accuracy and solve a common problem in ASRs, especially in UC when conferences might have white noises affecting the voice quality and thus the transcription.

The neural network architecture used for the denoising method 400 described herein can incorporate physical laws of sound propagation into its design. For instance, the wave equation serves as a governing principle to make the model's outputs adhere to acoustic physics: ${∇}^{2} ϕ - \frac{1}{{c}^{2}} \frac{{\partial }^{2} ϕ}{\partial {t}^{2}} = 0$ where (*ϕ*) represents the sound wave function, (*c*) is the speed of sound, and (*t*) denotes time. Using this equation, the model not only can learn from input-output pairs, but also can generate outputs that are physically consistent with the behavior of sound waves.

At step 407, the system can use specialized loss functions for audio waveforms. More specifically, the neural network can use a combined loss function that combines different loss equations that govern sound waves formation. The combined loss function is a mathematical way to guide a machine learning model to produce better results. In this case, the goal is to make the output audio (e.g., denoised signal) as close as possible to the clean audio (e.g. target signal) while following certain rules about how sound behaves and having the output be smooth, natural, and realistic.

The combined loss function may consist of five components: reconstruction loss, physics-based loss, total variation loss, energy loss, and spectral loss. Reconstruction Loss (*L*_{recon}) or Mean Squared Error (MSE) measures how close the denoised audio (*y*_{output,*i*}) is to the clean audio (*y*_{target,*i*}), For example, reconstruction loss may be calculated using the following equation: ${L}_{recon} = \frac{1}{N} {\sum }_{i = 1}^{N} {\left({y}_{output , i}-{y}_{target , i}\right)}^{2}$ Where N may represent the total number of audio samples in the time domain.

Reconstruction loss is the same as the Mean Squared Error (MSE), which calculates the average squared difference between the output and target signals. Using reconstruction loss, the denoised signal may match the clean signal as closely as possible.

Using Physics-Based Loss (*L*_{physics}), the output signal may respect certain physical properties of sound or follow physical laws. For example, physics-based loss may be calculated using the following equation: ${L}_{physics} = \frac{1}{N} {\sum }_{i = 1}^{N} \left|{y}_{output , i}\right|$

Physics-based loss may penalize large absolute values in the output signal, encouraging smoother and more physically realistic outputs. In real-world systems, sound signals often have certain constraints (e.g., energy conservation). With physics-based loss, the model may not produce unrealistic outputs violating those constraints.

Total Variation Loss (*L*_{TV}) encourages smoothness in the denoised signal by penalizing sudden changes between consecutive points in time. For example, total variation loss may be calculated using the following equation: ${L}_{TV} = {\sum }_{i = 1}^{N - 1} \left|{y}_{output , i + 1}-{y}_{output , i}\right|$

Clean audio typically doesn't have sharp jumps or discontinuities. Therefore, total variation loss can provide that the denoised signal is smooth and continuous, making it sound more natural.

Energy Loss (*L*_{energy}) can provide that the overall energy (e.g., intensity) of the denoised signal is similar to that of the noisy input. For example, energy loss may be calculated using the following equation: ${L}_{energy} = \frac{1}{N} {\sum }_{i = 1}^{N} \left|{y}_{output , i}-{y}_{noisy , i}\right|$ where, *y*_{noisy,*i*} is the original noisy input signal. Energy loss can prevent over-smoothing or excessive removal of details from the noisy input. Energy loss can maintain that enough detail is preserved while still cleaning up noise.

Spectral Loss (*L*_{spectral}) can compare how similar the frequency content (e.g., tones and pitches) of the output signal is to that of the target clean signal. The model can convert both signals into their frequency domain using a Fourier Transform: ${Y}_{output} = F \left({y}_{output}\right) , {Y}_{target} = F \left({y}_{target}\right)$ Then calculate: ${L}_{spectral} = \frac{1}{{N}_{f}} {\sum }_{k = 1}^{{N}_{f}} \left|\left|{Y}_{output , k}\right|-\left|{Y}_{target , k}\right|\right|$ where, |*Y*_{output,*k*}| and |*Y*_{target,*k*}| are the magnitude of each frequency component after applying Fourier Transform 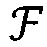 (*y*_{target}) and 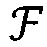 (*y*ₒᵤₜₚᵤₜ), and *N_{f}* is the number of frequency components.

The total loss (e.g., combined loss) can combine all these components into a single formula: ${L}_{total} = {L}_{recon} + {w}_{physics} {L}_{physics} + {w}_{TV} {L}_{TV} + {w}_{energy} {L}_{energy} + {w}_{spectral} {L}_{spectral}$ Where *w*ₓ is the corresponding weight of the individual losses or what emphasis to put on a certain loss function.

This loss function may impose multiple "rules" on the model: (i) match clean audio (reconstruction loss); (ii) follow physical behavior of sound (physics-based loss); (iii) avoid sharp discontinuities (total variation loss); (iv) preserve essential details (energy loss); and (v) maintain tonal quality (spectral loss).

At step 409, the system can complete the denoising process and at step 411, output the denoised audio. By combining data-driven learning with physics-based constraints, the denoising method 400 described herein can provide the following advantages. The physics constraints can help the AI model generalize better to unseen data by adhering to the fundamental laws of physics. Using the method 400, the denoised audio signal may behave in a way consistent with how sound waves propagate in reality. The physics loss acts as to regularize, potentially reducing overfitting to the training data. Embedding prior physical laws to loss function can compensate for smaller datasets by guiding the model with physical laws in addition to data input-output pairs, improving data efficiency and reducing the need for large datasets. The physics-based AI can improve the denoising performance and accuracy due to its compact model size, resulting in a lightweight model (e.g., for example 1.23MB) deployable on resource-constrained devices like IP phones. The system can support real-time denoising, even in low-latency scenarios. PINNs directly embed physical laws, ensuring their outputs align with interpretable scientific principles like energy conservation. The adherence to governing equations provides a built-in justification for predictions. In addition, the model can reveal where physics is violated or under-satisfied, offering clear feedback for refining the model or addressing data issues.

FIG. 5 illustrates a flowchart for creating a virtual assistant for a unified communication (UC) system according to aspects of this disclosure. The method 500 may be initiated from the commencement of use of the UC tool by a user. For example, the method 500 may be initiated by the beginning of a video call, teleconference, virtual meeting, and the like. In other embodiments, the method 500 may be initiated ad-hoc by a user, such as by the user turning on a setting within their UC tool. In other embodiments, the method 500 may be initiated on a routine schedule (e.g., every day, week, month, etc.).

The method 500 may begin at block 501, where the system may capture unstructured data from a UC system. Unstructured data may be data originating from the UC system or related to the UC system. For example, the data may include (i) meetings, conferences, video/audio recordings; (ii) screenshots of the product to integrate the AI-Assistant with (such as the user interface (UI)), diagrams, demos, and any type of visuals; (iii) remote procedure call (RPC) examples or Application Programming Interface (API) server logs, such as API documentation or API call examples or application or server logs; (iv) existing documentation or knowledge base (if available) even if not completed; or optionally, (v) manual syntax added by the assistant owner in the form of a few lines to tell the rest of the pipeline stages what the purpose of the assistant is. The data may further include stakeholder join/leave events, chat, audio, video, or shared screens from an event within the UC system (or screenshots from UC software), application documentation, server logs, or manual syntax. The event may include a virtual meeting, video call, phone call, teleconference, video conference, webinar, or other virtual event.

At block 503, the system can denoise, using a physics informed neural network (PINN), audio data from the unstructured data. The physics informed neural network may be of a size for deployment on very low-computational devices. Very low-computational devices refer to simple devices, such as an Internet Protocol (IP) phones. The system can further train the physics informed neural network with acoustic wave equations to distinguish speech from noise and to remove the noise; and denoise the audio data using the trained physics informed neural network to generate denoised audio data. The PINN can perform real-time denoising, where the PINN is trained using the following wave equation constraints: reconstruction loss (mean squared error) to ensure waveform accuracy; acoustic wave equation enforcement to maintain physical consistency in speech propagation; spectral fidelity loss to preserve harmonic integrity; energy conservation loss to retain the natural dynamics of speech; and total variation loss to smooth the waveform and remove discontinuities. The system can also transcribe and convert the denoised audio data into a text understandable to the virtual assistant model.

At block 505, the system can generate one or more training datasets from the unstructured data and the denoised audio data. The training datasets may be generated using one or more computerized models. The one or more training datasets may be tailored for UC-specific contexts. In some embodiments, the system can anonymize the unstructured data to remove personal information from the unstructured data. The computerized models may include an Artificial Intelligence (AI)-vision model, where the AI-vision model converts screenshots or demos into captions, user guides, and descriptions. The models may also learn from UI flows in screenshots and generates API (e.g., operation) call examples from unstructured server logs.

At block 507, the system can generate a virtual assistant model. The virtual assistant model may be of a size for deployment on low-computational devices, where a low-computational device may be a personal device, such as a laptop or mobile phone. The virtual assistant model may operate entirely on-premises to retain sensitive data locally.

At block 509, the system can train, using the one or more training datasets, the virtual assistant model to respond to queries regarding the UC system. For example, the model may be trained to receive a user query requesting changes to the UC infrastructure or device management and respond to said requests by either providing instructions for the user or perform the requested action itself.

At block 511, the system can deploy the virtual assistant model on the UC system for use by an end user. The virtual assistant can provide control over UC infrastructure using natural language voice/text commands, including configuring devices, provisioning network settings, diagnose problems, and automating administrative tasks. The above-described steps may constitute an automated pipeline that can resolve cross-platform dependencies.

In some embodiments, the system can receive configurations for the virtual assistant model from the end user via a graphical user interface (GUI). The virtual assistant model may also be configured by default automatically. Based on the configurations, the system can update the virtual assistant model.

In some embodiments, the system can track the performance of the virtual assistant model after it's been deployed. Based on the tracked performance, the system can update the virtual assistant model. The system can also track versions of the model, saving incremental versions of the assistant model via version control. In this way, if the performance of the assistant model decreases, the system can rollback to an older version of the model.

In some embodiments, the system can provide customer support automation by adapting an AI assistant to handle customer inquiries and provide troubleshooting. In some embodiments, the system can provide internal assistance in the UC sector by assisting employees with coding, documentation, and their daily tasks. In some embodiments, the system can provide consultancy services by providing expert advice to service teams and end-users. In some embodiments, the system can provide real-time edge denoising. For example, the inventive denoising technique in this system can be separated as a new product installable on IP phones and other small UC devices for real-time denoising. By utilizing it, a highly efficient denoising neural network with minimal parameters was created, avoiding the need for larger, resource-intensive AI models typically required for such tasks.

In some embodiments, the system can generate AI-solutions with optimal outcomes. For instance, the no-code platform which is an automation for the pipeline that follows the protocol can be used to generate AI-Solutions to different use-cases. This can allow users to input raw data and automatically get datasets prepared and models fine-tuned and served without coding.

In some embodiments, the system can provide an easy user experience (UX) by offering an intuitive interface with text and voice control, requiring no learning curve with multi-language for a broader user base.

In some embodiments, the system may have expanded industry applications. For example, the system can be adaptable to other industries (outside of UC systems) with similar needs for AI assistance.

Alternative host devices for the AI-assistant system may include the following: (i) Personal Computers (Deployable to any computational device including those with low resources); (ii) Smartphones (Deploying the AI assistant on mobile devices for increased accessibility); (iii) Embedded Systems (Integrating with IoT devices and UC infrastructures); (iv) Cloud/Hybrid Solution (Deployable into the cloud including cost-effective ones); and (v) Phones (for denoising capabilities or fundamental AI-assistant capabilities).

Furthermore, the invention's privacy-centric design, physics-driven denoising, and no-code modularity enable transformative use cases beyond UC infrastructure. For example, the customized AI solutions described herein can be used for sales by enhancing customer service experiences with personalized AI interactions and education by tailoring AI assistants for learning UC management systems.

Government sector and vertical industries with sensitive data may also use the AI-assistant system described herein. The AI-assistant system can provide privacy and security, making it ideal for automating public sector office and document workflows. The system described herein may also be used for legal firms as it can manage sensitive client information securely.

The system described herein can provide secure communications. In one aspect, the system described herein can provide encrypted voice denoising by integrating PINNs into tactical radios to clean audio in high-noise while preserving encryption. In one aspect, the system described herein can provide classified document pipelines by using the protocol to auto-generate training data from fragmented logs without external APIs.

In one aspect, the system described herein can provide industrial IoT & smart manufacturing. In one aspect, the system described herein can provide noise-robust voice control by deploying PINNs on factory-floor devices (e.g., PLCs) to denoise machinery sounds, enabling reliable voice commands for equipment control. In one aspect, the system described herein can provide edge diagnostics by training task-specific LoRA adapters to interpret sensor data (e.g., vibration logs) for predictive maintenance. In one aspect, the system described herein can provide embedded systems where small models can be embedded in IP devices and IOT devices for various tasks.

The system described herein can be used in healthcare & telemedicine. For example, in medical imaging the system can adapt the PINN framework to denoise ultrasound/CT scans by embedding wave physics (e.g., acoustic tomography equations).

The system described herein can be used in energy & utilities. For example, in remote grid management, the system can deploy edge-optimized assistants on substation PCs to execute CLI commands via voice (e.g., "Restart turbine 3").

The system described herein can be used in anomaly detection. For example, the system can use physics-informed AI to detect pipeline pressure irregularities from acoustic sensor data.

The system described herein can be used in retail & hospitality. For example, the system can perform privacy-safe analytics and process in-store CCTV footage locally to generate training data for inventory management bots.

The system described herein can be used in aviation & aerospace. For example, the system can perform maintenance log automation and convert technician voice notes into structured repair logs using on-prem ASR and DP.

The system described herein can be used in telecommunications. For example, in 5G network optimization, the system can train assistants to parse unstructured network logs (e.g., call drops) and auto-suggest parameter tweaks. As another example, in VoIP quality enhancement, the system can deploy PINNs as a firmware layer on routers for real-time packet-loss compensation.

FIG. 6 illustrates a block diagram of a system 600 that can be employed for creating an AI-assistant for a UC system, as described in greater detail below. System 600 is merely exemplary and embodiments of the system are not limited to the embodiments presented herein. System 600 can be employed in many different embodiments or examples not specifically depicted or described herein. In some embodiments, certain elements or modules of system 600 can perform various procedures, processes, and/or activities. In these or other embodiments, the procedures, processes, and/or activities can be performed by other suitable elements or modules of system 600.

Generally speaking, system 600 can be implemented with hardware and/or software. Part or all of the hardware and/or software implemented in system 600 can be conventional or part or all of the hardware and/or software can be customized (e.g., optimized) for implementing part or all of the functionality of system 600 described herein. When implemented as software, one or more elements of system 600 can be emulated (e.g., reproduced functionally and/or by action via software). For example, a virtual machine having one or more elements described below can be instantiated on one or more elements of system 100 (FIG. 1).

When implemented as hardware, one or more of the elements of system 600 can be coupled together using one or more chassis configured to hold one or more circuit boards and/or serial bus(es). These boards and buses allow the various elements of system 600 to communicate amongst each other to accomplish their intended purposes. While elements of system 600 are described below individually, each can also be integrated into one or more chassis, circuit boards, and/or buses of system 600. On the other hand, one or more elements of system 600 can also be removable (e.g., via a PCI slot on a motherboard and/or a USB port). One or more elements of system 600 may also be integrated and/or embedded in a different machine or manufacture. Although specific constructions of boards and buses within system 600 are not shown, it should be understood that their construction can be tied to a form factor selected for system 600.

System 600 can take a number of different form factors based on its implementation. For example, system 600 can be implemented as a desktop computer, a laptop computer, a mobile device, and/or a wearable device as described herein. Further, system 600 can comprise a single computer, a single server, a cluster or collection of computers or servers, or a cloud of computers or servers. Typically, a cluster or collection of servers can be used when the demand on 400 exceeds the reasonable capability of a single server or computer, when a distributed structure for system 600 is desired, and/or when parallel computing is desired.

In many embodiments, system 600 can comprise a processor 601, a memory storage 602, an input device 603, a graphics adapter 604, a display device 605, a graphical user interface (GUI) 606, and/or a network adapter 607.

Generally speaking, processor 601 can comprise any type of computational circuit. For example, processor 601 can comprise a microprocessor, a microcontroller, a controller, a complex instruction set computing (CISC) microprocessor, a reduced instruction set computing (RISC) microprocessor, a very long instruction word (VLIW) microprocessor, a graphics processor, a digital signal processor, application specific integrated circuits (ASICs), etc. Processor 601 can be configured to implement (e.g., run) computer instructions (e.g., program instructions) stored on memory devices in system 600. At least a portion of the program instructions, stored on these devices, can be suitable for carrying out at least part of the techniques and methods described herein. Architecture and/or design of processor 601 can be compliant with any of a variety of commercially distributed architecture families. For example, a processor can have a 32-bit (x86) architecture and/or a 64-bit (x86-64, IA64, and AMD64) architecture. Processor 601 can be configured to perform parallel computing in combination with other elements of system 600 and/or additional processors. Generally speaking, parallel computing can be seen as a technique where multiple elements of system 600 are used to perform calculations simultaneously. In this way, complex and repetitive tasks (e.g., training a predictive software application) can be performed faster and with less processing power than without parallel computing.

Generally speaking, memory storage 602 can comprise non-volatile memory (e.g., read only memory (ROM)) and/or volatile memory (e.g., random access memory (RAM)). The non-volatile memory can be removable and/or non-removable non-volatile memory. Meanwhile, RAM can comprise dynamic RAM (DRAM), static RAM (SRAM), or some other type of RAM. Further, ROM can include mask-programmed ROM, programmable ROM (PROM), one-time programmable ROM (OTP), erasable programmable read-only memory (EPROM), electrically erasable programmable ROM (EEPROM) (e.g., electrically alterable ROM (EAROM) and/or flash memory), or some other type of ROM. Memory storage 602 can comprise non-transitory memory and/or transitory memory. All or a portion of memory storage 602 can be referred to as memory storage module(s) and/or memory storage device(s). Memory storage 602 can have a number of form factors when used in system 600. For example, memory storage 602 can comprise a magnetic disk hard drive, a solid state hard drive, a removable USB storage drive, a RAM chip, etc.

Memory storage 602 can be encoded with a wide variety of computer code configured to operate system 600. For example, portions of memory storage 602 can be encoded with a boot code sequence suitable for restoring system 600 to a functional state after a system reset. As another example, portions of memory storage 602 can comprise microcode such as a Basic Input-Output System (BIOS) operable with elements of system 600. Further, portions of the memory storage 602 can comprise an operating system (e.g., a software program that manages the hardware and software resources of a computer and/or a computer network). The BIOS can be configured to initialize and test components of system 600 and load the operating system. Meanwhile, the operating system can perform basic tasks such as, for example, controlling and allocating memory, prioritizing the processing of instructions, controlling input and output devices, facilitating networking, and/or managing files. Exemplary operating systems can comprise software within the Microsoft^{®} Windows^{®}, Mac OS^{®}, Apple^{®} iOS^{®}, Google^{®} Android^{®}, UNIX^{®}, and/or Linux^{®} series of operating systems.

Input device 603 can be configured to allow a user to interact and/or control elements of system 600. A number of devices and be used as input device 603 alone or in combination. For example, input device 603 can comprise a keyboard, a mouse, a touch screen, a microphone, a camera, etc. Input device 603 can be coupled to other elements of system 600 in a number of ways. For example, input device 603 can be coupled via a Universal Serial Bus (USB) port in a wired and/or wireless manner or via a specialized port (e.g., a PS/2 port) depending on the specific device. User inputs through input device 603 can come in a number of forms. For example, when input device 603 comprises a microphone, user input can be received via voice commands and/or a speech to text software application. As another example, when input device 603 comprises a camera, user input can be received via bodily movements that are captured and interpreted by system 600.

Generally speaking, graphics adapter 604 can be configured to receive and/or generate one or more elements for display on display device 605. Exemplary embodiments of graphics adapter 604 can comprise devices within the NVIDIA^{®} GeForce^{®} and/or the AMD^{®} RX^{®} series of video cards. In many embodiments, a chipset present on graphics adapter 604 can be configured to perform similar, simultaneous computations in a manner more efficient than other chipsets. For example, rendering a 3D scene on graphics adapter 604 can involve repeated geometric calculations performed in parallel to generate the 3D scene. As another example, repeated mathematical calculations involved in training a predictive software application can be performed in parallel on graphics adapter 604 more efficiently than on processor 601. Display device 605 can receive and display signals from graphics adapter 604. A number of devices can be used as display device 605. For example, display device 605 can comprise a computer monitor, a television, a touch screen display, a heads up display (HUD) medium, etc.

In some embodiments, display device 605 can optionally display graphical user interface (GUI) 606. GUI 606 can be a part of and/or displayed by participant devices 103, 104. With regards to form, GUI 606 can comprise text and/or graphics (image) based user interfaces. For example, GUI 606 can comprise a heads up display (HUD). When GUI 606 comprises a HUD, GUI 606 can be projected onto a medium (e.g., glass, plastic, metal, etc.), displayed in midair as a hologram, and/or displayed on display device 605. GUI 606 can be color, black and white, and/or greyscale. GUI 606 can be implemented as an application running on a computer system, such as computer system 600, videoconference server 101 (FIG. 1), AI assistant server 102 (FIG. 1), and/or participant devices 103, 104 (FIG. 1). GUI 606 can also comprise a website accessed through a network (e.g., network 120 (FIG. 1)). For example, GUI 606 can comprise a cloud storage website. When GUI 606 allows for modification and/or changes to one or more settings in system 600, it can be referred to as an administrative (e.g., back end) GUI. GUI 606 can also be displayed as or on a virtual reality (VR) and/or augmented reality (AR) system or display. GUI 606 can receive a number of interactions from a user via input device 603. For example, an interaction with a GUI can comprise a click, a look, a selection, a grab, a view, a purchase, a bid, a swipe, a pinch, a reverse pinch, etc.

Network adapter 607 can be configured to connect system 600 to a computer network by wired communication (e.g., a wired network adapter) and/or wireless communication (e.g., a wireless network adapter). Network adapter 607 can be integrated into one or more chassis, circuit boards, and/or buses or be removable (e.g., via a PCI slot on a motherboard). For example, network adapter 607 can be implemented via one or more dedicated communication chips configured to receive various protocols of wired and/or wireless communications.

For simplicity and clarity of illustration, the drawing figures illustrate the general manner of construction, and descriptions and details of some features and techniques may be omitted to avoid unnecessarily obscuring the present disclosure. Additionally, elements in the drawing figures are not necessarily drawn to scale. For example, the dimensions of some of the elements in the figures may be exaggerated relative to other elements to help improve understanding of embodiments of the present disclosure. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "include," and "have," and any variations thereof, are intended to cover a non-exclusive inclusion, such that a process, method, system, article, device, or apparatus that comprises a list of elements is not necessarily limited to those elements but may include other elements not expressly listed or inherent to such process, method, system, article, device, or apparatus.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the apparatus, methods, and/or articles of manufacture described herein are, for example, capable of operation in other orientations than those illustrated or otherwise described herein.

The terms "couple," "coupled," "couples," "coupling," and the like should be broadly understood and refer to connecting two or more elements mechanically and/or otherwise. Two or more electrical elements may be electrically coupled together, but not be mechanically or otherwise coupled together. Coupling may be for any length of time, e.g., permanent or semi-permanent or only for an instant. "Electrical coupling" and the like should be broadly understood and include electrical coupling of all types. The absence of the word "removably," "removable," and the like near the word "coupled," and the like does not mean that the coupling, etc. in question is or is not removable.

As defined herein, two or more elements are "integral" if they are comprised of the same piece of material. As defined herein, two or more elements are "non-integral" if each is comprised of a different piece of material.

As defined herein, "real-time" can, in some embodiments, be defined with respect to operations carried out as soon as practically possible upon occurrence of a triggering event. A triggering event can include receipt of data necessary to execute a task or to otherwise process information. Because of delays inherent in transmission and/or in computing speeds, the term "real time" encompasses operations that occur in "near" real time or somewhat delayed from a triggering event. In a number of embodiments, "real time" can mean real time less a time delay for processing (e.g., determining) and/or transmitting data. The particular time delay can vary depending on the type and/or amount of the data, the processing speeds of the hardware, the transmission capability of the communication hardware, the transmission distance, etc. However, in many embodiments, the time delay can be less than approximately one second, two seconds, five seconds, or ten seconds.

As defined herein, "approximately" can, in some embodiments, mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.

Although systems and methods for context dependent invocation of predictive software application and data storage have been described with reference to specific embodiments, it will be understood by those skilled in the art that various changes may be made without departing from the scope of the disclosure. Accordingly, the disclosure of embodiments is intended to be illustrative of the scope of the disclosure and is not intended to be limiting. It is intended that the scope of the disclosure shall be limited only to the extent required by the appended claims. For example, to one of ordinary skill in the art, it will be readily apparent that any element of FIGs. 1-6 may be modified, and that the foregoing discussion of certain of these embodiments does not necessarily represent a complete description of all possible embodiments. For example, one or more of the procedures, processes, or activities of FIG. 1 may include different procedures, processes, and/or activities and be performed by many different modules, in many different orders.

All elements claimed in any particular claim are essential to the embodiment claimed in that particular claim. Consequently, replacement of one or more claimed elements constitutes reconstruction and not repair. Additionally, benefits, other advantages, and solutions to problems have been described with regard to specific embodiments. The benefits, advantages, solutions to problems, and any element or elements that may cause any benefit, advantage, or solution to occur or become more pronounced, however, are not to be construed as critical, required, or essential features or elements of any or all of the claims, unless such benefits, advantages, solutions, or elements are stated in such claim.

Moreover, embodiments and limitations disclosed herein are not dedicated to the public under the doctrine of dedication if the embodiments and/or limitations: (1) are not expressly claimed in the claims; and (2) are or are potentially equivalents of express elements and/or limitations in the claims under the doctrine of equivalents.

## Claims

1. A computerized method for creating a virtual assistant for a unified communication, UC, system automated pipeline resolving cross-platform dependencies, the method comprising:
capturing unstructured data from the UC system;
denoising in real-time, using a physics informed neural network, PINN, audio data from the unstructured data, the PINN being of a size for deployment on very low-computational devices and being trained using wave equation constraints:
generating, using one or more computerized models, one or more training datasets from the unstructured data and the denoised audio data, the one or more training datasets being tailored for UC-specific contexts;
generating a virtual assistant model, the virtual assistant model being of a size for deployment on low-computational devices;
training, using the one or more training datasets, the virtual assistant model to respond to queries regarding UC infrastructure or device management; and
deploying the virtual assistant model on the UC system for use by an end user.

2. The computerized method of claim 1, wherein the unstructured data comprises one or more of stakeholder join/leave events, chat, audio, video, screenshots, or shared screens from an event within the UC system, application documentation, server logs, or manual syntax and optionally wherein the event comprises a virtual meeting, video call, phone call, teleconference, video conference, webinar, or other virtual event.

3. The computerized method of claim 1 or claim 2, further comprising anonymizing the unstructured data to remove personal information from the unstructured data.

4. The computerized method of any preceding claim, further comprising:
transcribing the denoised audio data; and
converting the denoised audio data into a text understandable to the virtual assistant model.

5. The computerized method of any preceding claim, wherein the one or more computerized models comprise an Artificial Intelligence (AI)-vision model, wherein the AI-vision model converts screenshots or demos into captions, user guides, and descriptions, learns from UI flows in the screenshots, and generates API call examples from unstructured server logs.

6. The computerized method of any preceding claim, further comprising:
receiving configurations for the virtual assistant model from the end user via a graphical user interface or from default configurations; and
updating the virtual assistant model based on the configurations.

7. The computerized method of any preceding claim, wherein the virtual assistant model operates entirely on-premises to retain sensitive data locally.

8. The computerized method of any preceding claim, further comprising:
saving a plurality of incremental versions of the virtual assistant model via version control;
tracking the virtual assistant model performance after deployment; and
updating the virtual assistant model to one of the plurality of incremental versions based on tracked performance.

9. The computerized method of any preceding claim, wherein denoising the audio data from the unstructured data comprises:
training the PINN with acoustic wave constraints to distinguish speech from noise and to remove the noise, wherein acoustic wave constraints comprise reconstruction loss (mean squared error) to ensure waveform accuracy; acoustic wave equation enforcement to maintain physical consistency in speech propagation; spectral fidelity loss to preserve harmonic integrity; energy conservation loss to retain the natural dynamics of speech; and total variation loss to smooth the waveform and remove discontinuities; and
denoising the audio data using the trained PINN to generate denoised audio data.

10. A virtual assistant system comprising:
an electronic device comprising:
a meeting application configured to facilitate virtual communication between two or more people; and
a processor configured to:
capture unstructured data from the meeting application;
denoise, using a physics informed neural network, audio data from the unstructured data, the physics informed neural network being of a size for deployment on low-computational devices;
generate, using one or more computerized models, one or more training datasets from the unstructured data and the denoised audio data, the one or more training datasets being tailored for meeting application-specific contexts;
generate a virtual assistant model, the virtual assistant model being of a size for deployment on low-computational devices;
train, using the one or more training datasets, the virtual assistant model to respond to queries regarding the meeting application infrastructure or device management; and
deploy the virtual assistant model on the meeting application for use by an end user, wherein the virtual assistant model provides control over UC infrastructure using natural language voice/text commands, including configuring devices, provisioning network settings, diagnose problems, and automating administrative tasks.

11. The system of claim 10, wherein the processor is further configured to anonymize the unstructured data to remove personal information from the unstructured data.

12. The system of claim 10 or claim 11, wherein the processor is further configured to:
transcribe the denoised audio data; and
convert, based on the transcription, the denoised audio data into a text understandable to the virtual assistant model.

13. The system of any of claims 10 to 12, wherein the one or more computerized models comprise an Artificial Intelligence (AI)-vision model, wherein the AI-vision model converts screenshots or demos into captions, user guides, and descriptions and/or wherein the processor is further configured to:
receive configurations for the virtual assistant model from the end user via a graphical user interface; and
update the virtual assistant model based on the configurations.

14. The system of any of claims 10 to 13, wherein the processor is further configured to:
track the virtual assistant model performance after deployment; and
update the virtual assistant model based on tracked performance.

15. A method for denoising audio data using a physics informed neural network, the method comprising:
receiving unstructured data comprising audio or video data;
training the physics informed neural network with acoustic wave equations to distinguish speech from noise and to remove the noise, the physics informed neural network being of a size for deployment on low-computational devices; and
denoising the audio or video data using the trained physics informed neural network to generate denoised audio or video data.
